# EUROPÄISCHE PATENTSCHRIFT

(11) **EP 2 947 346 B1**
(45) Veröffentlichungstag und Bekanntmachung des Hinweises auf die Patenterteilung: **04.01.2017**
(21) Anmeldenummer: 14001818.5
(22) Anmeldetag: 23.05.2014
(51) Int. Cl.: F16G 13/20

(54) **3D-Rückensteife Kette**
3D push-pull chain
Chaîne autoportante 3D

(43) Veröffentlichungstag der Anmeldung: 25.11.2015
(73) Patentinhaber: IWIS Antriebssysteme GmbH & Co. KG, 81369 München (DE)
(72) Erfinder: Hartinger, Gerhard, 82538 Geretsried (DE); Sahin, Orhan, 81377 München (DE)
(74) Vertreter: Grünecker Patent- und Rechtsanwälte PartG mbB

(56) Entgegenhaltungen:
- WO-A1-2011/126386
- DE-A1- 3 123 634
- FR-A- 999 751
- US-A- 3 394 608
- US-A- 3 908 963
- US-A- 3 911 802

## Beschreibung

Die vorliegende Erfindung betrifft eine Schubkette mit mittels jeweils eines Kettengelenks miteinander verbundenen Kettengliedern.

Schubketten sind in vielfältigen Formen im Stand der Technik zu finden. Meistens handelt es sich um Laschenketten, mit sich abwechselnden Innen- und Außenkettengliedern, die mittels eines Kettengelenks miteinander verbunden sind. Die Innen- und/oder Außenlaschen oder spezielle Versteifungslaschen werden so ausgeformt, dass die Kette in einer Schwenkrichtung des Kettengelenks biegesteif gemacht werden kann. Dies erfolgt in aller Regel bei gerader geführter Kette oder leicht überschwenkten Kettengelenken, so dass dann Schubkräfte übertragen werden können. In die andere Schwenkrichtung sind die Kettengelenke nach wie vor schwenkbar und die Kette kann entsprechend, z.B. um ein Kettenrad herumgeführt werden. Auch der Antrieb einer solchen Kette erfolgt im Allgemeinen über ein Kettenrad. Selbstverständlich können diese Ketten in aller Regel auch Zugkräfte übertragen. Schubketten finden z.B. Anwendung bei Türschließanlagen, Fensterhebevorrichtungen etc. Ein Einsatz von rückensteifen Ketten ist zuweilen mit größerem Platzbedarf verbunden, insbesondere wenn die Kette zur Speicherung oder für den Antrieb aufgewickelt werden soll. Zum Teil verhindert dieser Raumbedarf auch die Anwendung von rückensteifen Ketten.

Es ist daher eine Aufgabe der vorliegenden Erfindung, eine Schubkette der eingangs genannten Art bereitzustellen, die vielseitiger einsetzbar ist und größeren Gestaltungsspielraum für die Unterbringung zulässt.

Aus der DE 3123634 A1 ist ein Faltspiel, bestehend aus einzelnen Gliedern bekannt, wobei die Glieder über Gelenke miteinander verbunden sind, von denen einige als Dreh- und andere als Schwenkgelenke ausgebildet sind, und die Aufeinanderfolge der Gelenke und die Ausbildung der Glieder einer vorgegebenen Faltordnung entspricht.

Aus der US 3911802 A ist eine Schubkette zur Betätigung eines Hubdaches bekannt. Die Schubkette umfasst speziell ausgeformte Kettenglieder, die bei einer geraden Ausrichtung der Kette zu einer Versteifung führen und somit eine Schubkraft übertragen können.

Die US 3394608 A befasst sich mit einer Kreuzgelenkkette, die in zwei Ebenen verschwenkbar ausgestaltet ist. An den jeweiligen Enden des Kreuzgelenks sind hierzu Laufrollen angeordnet, d.h. vier Laufrollen pro Kreuzgelenk.

Diese Aufgabe wird erfindungsgemäß dadurch gelöst, dass die Kettengelenke eines ersten Kettenteilstücks mit ihren Gelenkachsen eine erste Ausrichtung aufweisen, und dass die Gelenkachsen der Kettengelenke eines zweiten Kettenteilstücks in einer zweiten, um eine Längsachse der rückensteifen Kette verdrehten Ausrichtung angeordnet sind oder in diese verdrehte Ausrichtung überführbar sind.

Durch diese Aufteilung lässt sich die Schubkette z.B. in einen Antriebsteil und einen Aktionsteil aufteilen, die bezogen auf die Kettenlängsachse in unterschiedlicher Verdrehrichtung zueinander geführt werden. Die Kette kann also nicht nur in einer Ebene geführt und aufgewickelt werden, sondern zumindest in zwei unterschiedlichen Ebenen verlaufen. Bislang war der Freiheitsgrad einer Schubkette zweidimensional. Durch die vorgeschlagene Lösung wird der Freiheitsgrad der Schubkette in Schub- und Zugrichtung um mindestens eine Dimension erweitert. Hierdurch werden komplexe Kinematikstrukturen realisierbar. Die Kraftflüsse in diesen Kinematiken können sowohl in Zug- als auch in Druckrichtungen übertragen werden. Insbesondere wird die Kompaktheit von Antrieben für diese Schubkette um eine Dimension erweitert, da die Unterbringung der Schubkette in einem Antrieb nun unabhängig von der Aktionsrichtung der Kette ist. Z.B. könnte die Aktionsrichtung senkrecht zur Aufwickel- oder Einschubebene der Schubkette im Antrieb ausgerichtet sein.

Bevorzugt sind das erste Kettenteilstück und das zweite Kettenteilstück mittels eines die Verdrehung vorgegebenen oder hervorrufbaren Verbindungsstücks miteinander verbunden. Das Verbindungsstück kann entweder einen festen Verdrehwinkel vorgeben oder mehrere Verdrehwinkel, auch stufenlos, bereitstellen.

Bei einer weiteren Ausführungsform ist vorgesehen, dass jedes Kettenteilstück abwechselnd mittels jeweils eines Kettengelenks miteinander verbundene Innen- und Außenkettenglieder umfasst, wobei die Kettengelenke aus jeweils einem Kettenbolzen des Außenkettengliedes und einer Hülse des Innenkettengliedes bestehen. Hierbei handelt es sich um den gängigsten Aufbau einer Gliederkette. Die Kettenbolzen sind jeweils in den Hülsen drehbar geführt.

Günstigerweise kann das Verbindungsstück eine erste Verbindungsstelle zum Verbinden mit dem ersten Kettenteilstück und ein zweite Verbindungsstellen zum Verbinden mit dem zweiten Kettenteilstück aufweisen und die Verbindungsstellen das erste und das zweite Kettenteilstück in einem Winkel im Bereich von 30° bis 150°, bevorzugt 60° bis 120°, insbesondere 90°, zueinander verdrehen. Es kann demnach auf die jeweilige Antriebssituation zugeschnitten und der geeignete Winkel gewählt werden, wobei dem Winkel von 90° besondere Bedeutung zukommt.

Alternativ kann das Verbindungsstück eine erste Verbindungsstelle zum Verbinden mit dem ersten Kettenteilstück und eine zweite Verbindungsstelle zum Verbinden mit dem zweiten Kettenteilstück aufweisen, wobei die erste und die zweite Verbindungsstelle mittels eines dazwischen angeordneten Drehgelenks zueinander verdrehbar angeordnet sind. Eine solche Ausführung bietet die Möglichkeit, ein und dieselbe Schubkette für unterschiedlichste Antriebssituationen, in denen unterschiedliche Verdrehwinkel gefordert sind, einzusetzen. Darüber hinaus besteht auch die Möglichkeit, eine Verdrehung erst während der Führung der rückensteifen Kette vorzunehmen.

Bei einer weiteren Ausführungsform ist vorgesehen, dass das Verbindungsstück als Verbindungsstellen zwei Löcher aufweist, in denen jeweils ein Kettenbolzen des Innenkettengliedes angeordnet ist. Dabei besteht die Möglichkeit, dass der Kettenbolzen schwenkbar in den Löchern aufgenommen ist oder festgesetzt wird. Dies hängt maßgeblich davon ab, ob das Verbindungsstück auch umgelenkt werden soll. Darüber hinaus spart man sich bei fixierten Kettenbolzen auch eine entsprechende Versteifungskontur an dem Verbindungsstück.

Alternativ oder zusätzlich kann das Verbindungsstück eine Versteifungskontur für das erste Kettenteilstück und/oder eine Versteifungskontur für das zweite Kettenteilstück aufweisen. Dies bietet sich insbesondere dann an, wenn das Verbindungsstück relativ nah an die Umlenkstelle herangeführt werden soll.

Wenn eine Schubkette gewünscht ist, die auch komplexeren kinematischen Strukturen gerecht werden soll, dann können mehr als zwei Kettenteilstücke vorgesehen sein, von denen zumindest zwei eine verdrehte Ausrichtung zueinander aufweisen oder in diese verdrehte Ausrichtung zueinander überführbar sind. Hier gibt es die unterschiedlichsten Kombinationsmöglichkeiten. Entweder können alle Kettenteilstücke jeweils zueinander verdreht angeordnet sein oder es können auch voneinander getrennt im Kettenstrang vorgesehene Kettenteilstücke die gleiche Verdrehausrichtung aufweisen, wohingegen mindestens ein anderes Kettenteilstück eine dazu verdrehte Anordnung aufweist.

Bei einer weiteren Ausgestaltungsvariante ist vorgesehen, dass das Verbindungsstück als Funktionsbauteil mit einer zur Kraftübertragung in Kettenlängsrichtung zusätzlichen Funktion ausgestaltet ist. Hier sind Funktionen gemeint, die in aller Regel eine Betätigungs- oder Bewegungswirkung auf meist von der Kette unabhängige Elemente haben. Das Verbindungsstück könnte z.B. als Öffnungs- und Verschlussschieber für eine Tür oder ein Fenster Verwendung finden.

Darüber hinaus bezieht sich die Erfindung auch auf einen Kettentrieb mit einer Schubkette nach einem der Ansprüche 1 bis 9, einem Antrieb, der mit dem ersten Kettenteilstück im Eingriff steht und einer Umlenkvorrichtung, die mit dem zweiten oder weiterem Kettenteilstück im Eingriff steht und das zweite oder weitere Kettenteilstück umlenkt. Die Schubkette wird als 3D-Kette eingesetzt und lässt sich somit in zwei unterschiedlichen Raumebenen umlenken, bzw. führen. Das bietet z.B. die Möglichkeit, das mit dem Antrieb in Interaktion stehende Kettenteilstück raumsparend unterzubringen, so dass weniger voluminös Strukturen notwendig sind. So ist z.B. die Unterbringung in einer Ebene möglich, die senkrecht zur Betätigungsrichtung eines zweiten oder weiteren Kettenteilstücks angeordnet ist.

Bevorzugt kann die Umlenkvorrichtung ein Kettenrad und/oder eine Führungsbahn und/oder eine Spannschiene sein. Hierdurch sind die vielfältigsten Gestaltungsspielräume eröffnet für eine raumsparende Unterbringung.

Im Folgenden wir die Erfindung anhand einer Zeichnung näher erläutert. Es zeigen:
- Fig. 1: ein Teilstück einer erfindungsgemäßen Schubkette,
- Fig. 2: das Verbindungsstück aus Fig. 1 in perspektivischer Darstellung,
- Fig. 3: eine perspektivische Darstellung eines erfindungsgemäßen Kettentriebs,
- Fig. 4: den Kettentrieb aus Fig. 3 in einer Draufsicht,
- Fig. 5: den Kettentrieb aus Fig. 3 in einer Vorderansicht und

- Fig. 6: den Kettentrieb aus Fig.3 in einer Seitenansicht.

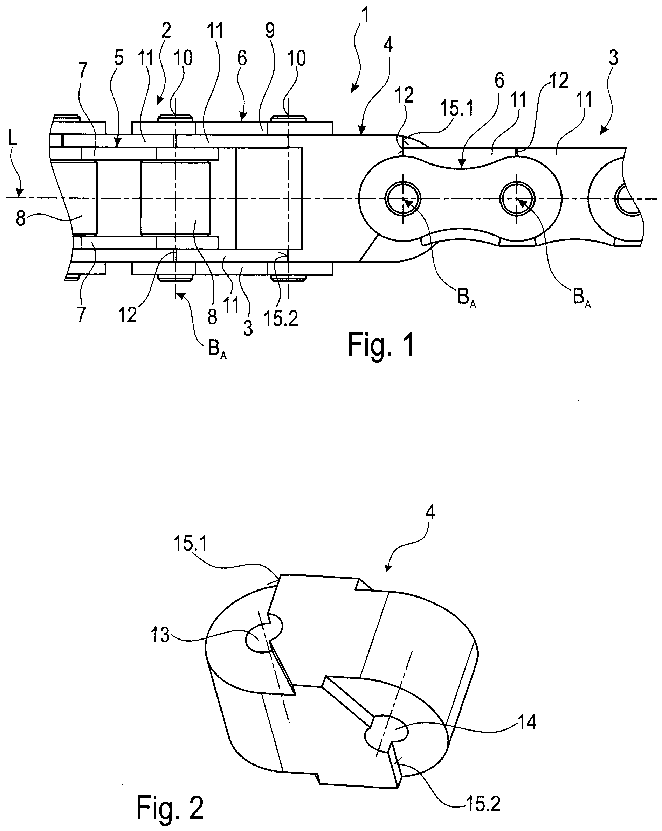

Die in Fig. 1 dargestellte Schubkette 1 umfasst ein erstes Kettenteilstück 2 und ein zweites Kettenteilstück 3, die mittels eines dazwischen angeordneten Verbindungsstücks 4 um die Längsachse L der rückensteifen Kette 1 verdreht zueinander verbunden sind.

Das erste und das zweite Kettenteilstück 2 und 3 bestehen jeweils aus abwechselnd miteinander verbundenen Innen- und Außenkettengliedern 5 und 6.

Jedes Innenkettenglied 5 besteht aus zwei parallel zueinander angeordneten Innenlaschen 7 und zwei diese miteinander verbindende, in der Zeichnung nicht zu sehende, Hülsen. Auf den Hülsen ist jeweils drehbar eine Rolle 8 angeordnet.

Jedes Außenkettenglied 6 besteht aus parallel im Abstand zueinander angeordneten Außenlaschen 9 und zwei diese miteinander verbindende und im Teilungsabstand der Kette 1 angeordnete Kettenbolzen 10. Hierzu sind die Kettenbolzen 10 in entsprechenden Öffnungen in den Außenlaschen 9 eingepresst.

Zum Bilden eines Kettengelenks erstreckt sich jeweils ein Kettenbolzen 10 des Außenkettengliedes 6 durch eine Hülse des Innenkettengliedes 5.

Zwischen den Innenlaschen 7 und den Außenlaschen 9 sind Versteifungslachsen 11 angeordnet. Deren Kontur ist so gewählt, dass diese einen Teil des Außenumfangs (ca. 157,5°) umgreifen. Die Versteifungslaschen 11 weisen jeweils eine Anschlagfläche 12 auf. Benachbarte Anschlagflächen 12 kommen bei einer geraden Kettenführung zur Anlage und bewirken somit eine Versteifung in eine Richtung, während das jeweilige Kettenteilstück 2 und 3 in die andere Richtung aufgrund der Kontur der Versteifungslaschen 11 um bis zu ca. 45° abknicken kann. Das erste und das zweite Kettenteilstück 2, 3 sind um 90° zueinander verdreht angeordnet, so dass die zugehörigen Kettenbolzenachsen ebenfalls senkrecht zueinander ausgerichtet sind. Die Kettenbolzenachsen des ersten Kettenteilstücks 2 sind parallel zueinander angeordnet und die Kettenbolzenachsen des zweiten Kettenteilstücks 3 sind entsprechend parallel zueinander angeordnet. Das Außen- und Innenkettenglied 6, 5 sind bevorzugt aus einem Stahlwerkstoff hergestellt.

Unter Zuhilfenahme der Fig. 2 wird nunmehr das Verbindungsstück 4 näher erläutert. Das Verbindungsstück 4 weist zwei im 90°-Winkel zueinander verdreht und im Teilungsabstand der Kette 1 zueinander angeordnete Löcher 13 und 14 auf. Durch das Loch 13 erstreckt sich ein Kettenbolzen 10 des ersten Kettenteilstücks 2 und durch das Loch 14 ein Kettenbolzen 10 des zweiten Kettenteilstücks 3. Im vorliegenden Fall ist das Verbindungsstück ein massives Metallstück, z.B. aus Stahl oder Aluminium. Die Breite des Verbindungsstücks 4 ist so gewählt, dass es mit den Außenflächen der Versteifungslaschen 11 fluchtet. Die jeweiligen Stirnflächen sind zylinderförmig abgerundet. Am Verbindungsstück 4 sind Anschlagflächen 15 vorgesehen, die mit den entsprechenden Anschlagflächen 12 der zugehörigen Versteifungslaschen 11 zur Anlage kommen können. Die jeweiligen Anschlagflächen 15.1 und 15.2 erstrecken sich immer nur von dem zugehörigen Loch 13, 14 bis zur Außenseite. Auf der gegenüberliegenden Seite ist die Konturierung so gewählt, dass ein entsprechendes Abwinkeln der Kette 1 weiter möglich ist.

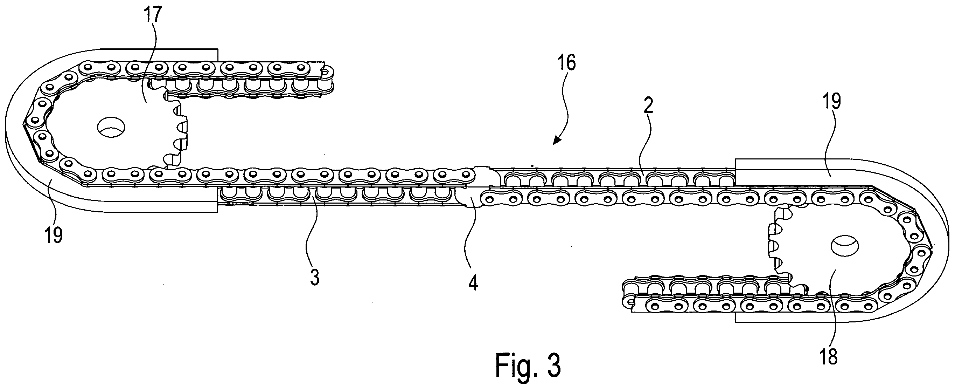

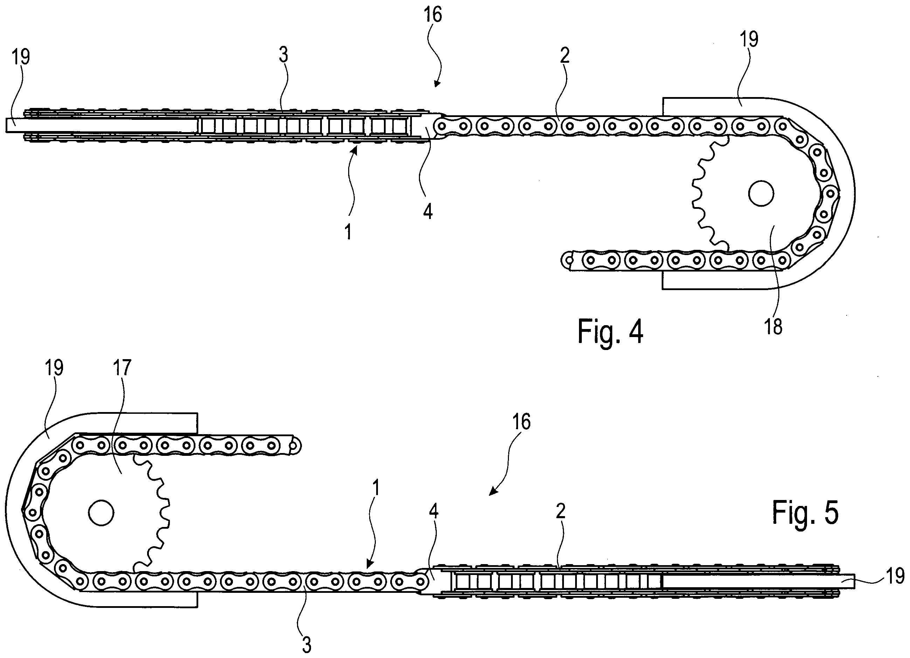

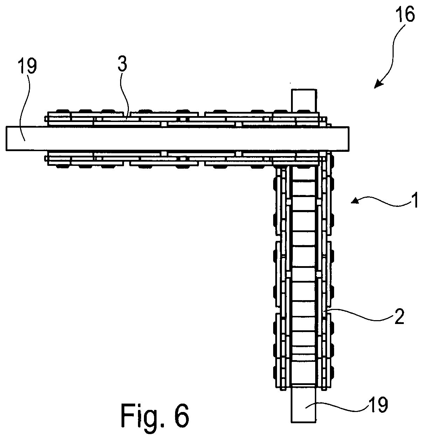

Im Folgenden wird nunmehr anhand der Fig. 3 bis 6 nähert erläutert, wie die erfindungsgemäße Schubkette 1 in einem Kettentrieb 16 einsetzbar ist.

Der Kettentrieb 16 umfasst zwei Kettenräder 17, 18, deren Achsen senkrecht zueinander und im Abstand voneinander verlaufen. Den Kettenrändern 17, 18 ist auch jeweils an der Außenseite eine U-förmige Führung 19 zugeordnet. Aus den Figuren ist sehr gut ersichtlich, dass die Schubkette 1 nicht nur in einer Ebene, sondern dreidimensional verläuft. Dies bietet unterschiedliche Antriebs- und Unterbringungsmöglichkeiten und die Kette kann sowohl im Druck- als auch im Zugbetrieb verwendet werden. Von Vorteil ist dies insbesondere, wenn jedem Kettenteilstück 2, 3 eine andere Funktion zugeordnet wird. Z.B. kann das zweite Kettenteilstück 3 eine Aktionsrichtung für die Kette vorgeben. Hierbei muss das zweite Kettenteilstück 3 auch nicht vollständig um ein zugehöriges Kettenrad 17 herumgelenkt sein, sondern eine 90°-Umlenkung kann durchaus ausreichen. Hierdurch können auch Druckkräfte senkrecht zur von dem ersten Kettenteilstück 2 aufgespannten Ebene ausgeübt werden. Dem ersten Kettenteilstück 2 kann die Antriebsfunktion für den gesamten Strang zugeordnet werden. Das Kettenrad 18 würde dann als Antrieb sowohl für die Druck- als auch für die Zugkräfte verantwortlich sein. Hier bestünde auch die Möglichkeit, die Kette in einer anderen Ebene unterzubringen. Im Antriebsbereiche ließ sich z.B. die Kette aufwickeln oder bauraumgünstig z.B. im Einschub, also gestreckt, unterbringen. Auch hier kann es z.B. von Vorteil sein, wenn das erste Kettenteilstück 2 nur lediglich um 90° um das Antriebskettenrad 18 herumgeführt wird und der darüber hinaus geführte Abschnitt des ersten Kettenteilstücks 2 könnte dann in einem Speicher senkrecht zur von dem zweiten Kettenteilstück 3 aufgespannten Ebene untergebracht werden. Es bieten sich also Bauraumvorteile, weil ein Unterbringen senkrecht zur Aktionsrichtung möglich ist.

Das Verbindungsstück 4 kann auch so ausgeführt sein, dass zwischen den beiden Löchern 13, 14 ein Drehgelenk angeordnet ist, so dass jede beliebige Winkelstellung der beiden Kettenteilstücke 2, 3 zueinander eingenommen werden kann. Es besteht aber auch die Möglichkeit, die Verdrehung des Drehgelenks zu begrenzen und/oder festzusetzen. Darüber hinaus kann das Verbindungsstück 4 auch als Funktionsbauteil ausgestaltet sein. Eine Möglichkeit besteht z.B. in der Aktuierung zusätzlicher Elemente durch den Kettentrieb 16 mittels des Verbindungsstücks 4.

### Bezugszeichenliste

- 1: Schubkette (rückensteife Kette)
- 2: erstes Kettenteilstück
- 3: zweites Kettenteilstück
- 4: Verbindungsstück
- 5: Innenkettenglied
- 6: Außenkettenglied
- 7: Innenlaschen
- 8: Rolle
- 9: Außenlaschen
- 10: Kettenbolzen
- 11: Versteifungslasche
- 12: Anschlagfläche
- 13: Loch
- 14: Loch
- 15.1,15.2: Anschlagfläche
- 16: Kettentrieb
- 17: Kettenrad
- 18: Kettenrad
- 19: Führung

## Patentansprüche

1. Schubkette (1) mit mittels jeweils eines Kettengelenks miteinander verbundenen Kettengliedern (5,6), **dadurch gekennzeichnet, dass** die Kettengelenke eines ersten Kettenteilstücks (2) mit ihren Gelenkachsen eine erste Ausrichtung aufweisen und dass die Gelenkachsen der Kettengelenke eines zweiten Kettenteilstücks (3) in einer zweiten, um eine Längsachse (L) verdrehten Ausrichtung angeordnet sind oder in diese verdrehte Ausrichtung überführbar sind.

2. Schubkette (1) nach Anspruch 1, **dadurch gekennzeichnet, dass** das erste Kettenteilstück (2) und das zweite Kettenteilstück (3) mittels eines die Verdrehung vorgebenden oder hervorrufbaren Verbindungsstücks (4) miteinander verbunden sind.

3. Schubkette (1) nach Anspruch 1 oder 2, **dadurch gekennzeichnet, dass** jedes Kettenteilstück (2) abwechselnd mittels jeweils eines Kettengelenks miteinander verbundene Innen- und Außenkettenglieder (5,6) umfasst, wobei die Kettengelenke aus jeweils einem Kettenbolzen (10) des Außenkettengliedes (6) und einer Hülse des Innenkettengliedes (5) bestehen.

4. Schubkette (1) nach einem der vorherigen Ansprüche, **dadurch gekennzeichnet, dass** das Verbindungsstück (4) eine erste Verbindungsstelle zum Verbinden mit dem ersten Kettenteilstück (2) und eine zweite Verbindungsstelle zum Verbinden mit dem zweiten Kettenteilstück (3) aufweist und die Verbindungsstellen das erste und das zweite Kettenteilstück (2,3) in einem Winkel im Bereich von 30° - 150°, bevorzugt 60° - 130°, insbesondere 90° zueinander verdrehen.

5. Schubkette (1) nach einem der vorherigen Ansprüche, **dadurch gekennzeichnet, dass** das Verbindungsstück (4) eine erste Verbindungsstelle zum Verbinden mit dem ersten Kettenteilstück (2) und eine zweite Verbindungsstelle zum Verbinden mit dem zweiten Kettenteilstück (3) aufweist, wobei die erste und die zweite Verbindungsstelle mittels eines dazwischen angeordneten Drehgelenks zueinander verdrehbar angeordnet sind.

6. Schubkette (1) nach einem der vorherigen Ansprüche, **dadurch gekennzeichnet, dass** das Verbindungsstück (4) als Verbindungsstellen zwei Löcher (13,14) aufweist, in denen jeweils ein Kettenbolzen der Außenkettenglieder (6) angeordnet ist.

7. Schubkette (1) nach einem der vorherigen Ansprüche, **dadurch gekennzeichnet, dass** das Verbindungsstück (4) eine Versteifungskontur für das erste Kettenteilstück (2) und/oder eine Versteifungskontur für das zweite Kettenteilstück (3) aufweist.

8. Schubkette (1) nach einem der vorherigen Ansprüche, **dadurch gekennzeichnet, dass** mehr als zwei Kettenteilstücke (2,3) vorgesehen sind, von denen zumindest zwei eine verdrehte Ausrichtung zueinander aufweisen oder in diese verdrehte Ausrichtung zueinander überführbar sind.

9. Schubkette (1) nach einem der vorherigen Ansprüche, **dadurch gekennzeichnet, dass** das Verbindungsstück (4) als Funktionsbauteil mit einer zur Kraftübertragung in Kettenlängsrichtung (L) zusätzlichen Funktion ausgestaltet ist.

10. Kettentrieb (16) mit einer Schubkette (1) nach einem der Ansprüche 1 bis 9, einem Antrieb, der mit dem ersten Kettenteilstück (2) in Eingriff steht und einer Umlenkvorrichtung, die mit dem zweiten oder weiteren Kettenteilstück (3) in Eingriff steht und das zweite oder weitere Kettenteilstück (3) umlenkt.

11. Kettentrieb (16) nach Anspruch 10, **dadurch gekennzeichnet, dass** die Umlenkvorrichtung ein Kettenrad (17,18) umfasst.

12. Kettentrieb (16) nach Anspruch 10, **dadurch gekennzeichnet, dass** die Umlenkvorrichtung eine Führungsbahn oder -schiene (19) umfasst.

## Claims

1. Push pull chain (1) with chain links (5,6) that are connected to each other by means of respectively one chain joint, **characterized in that** the chain joints of a first chain section (2) with their joint axes have a first orientation and that the joint axes of the chain joints of a second chain section (3) are arranged in a second orientation that is twisted around a longitudinal axis (L) or that they can be set to this twisted orientation.

2. Push pull chain (1) according to claim 1, **characterized in that** the first chain section (2) and the second chain section (3) are interconnected by means of a linking piece (4) that predetermines or triggers the twisting effect.

3. Push pull chain (1) according to claim 1 or 2, **characterized in that** each chain section (2) comprises internal and external chain links (5,6) that are alternatingly interconnected by means of one respective chain link, wherein the chain links each consist of a chain bolt (10) of the external chain link (6) and a sleeve of the internal chain link (5).

4. Push pull chain (1) according to one of the preceding claims, **characterized in that** the linking piece (4) has a first junction point for connection with the first chain piece (2) and a second junction point for connection with the second chain section (3) and that the junction points twist the first and the second chain section (2,3) in an angle in the range of 30° - 150°, preferably 60° - 130°, especially 90°, towards each other.

5. Push pull chain (1) according to one of the preceding claims, **characterized in that** the linking piece (4) has a first junction point for connection with the first chain section (2) and a second junction point for connection with the second chain section (3), wherein the first and the second junction point are arranged twistably to each other by means of a rotary joint installed in between.

6. Push pull chain (1) according to one of the preceding claims, **characterized in that** the linking piece (4) has two holes (13, 14) as junction points, in which a chain bolt of the external chain links (6) is respectively arranged.

7. Push pull chain (1) according to one of the preceding claims, **characterized in that** the linking piece (4) has a stiffening contour for the first chain section (2) and/or a stiffening contour for the second chain section (3).

8. Push pull chain (1) according to one of the preceding claims, **characterized in that** more than two chain sections (2,3) are provided, of which at least two have a twisted orientation towards each other or can be set to this twisted orientation towards each other.

9. Push pull chain (1) according to one of the preceding claims, **characterized in that** the linking piece (4) is designed as a functional component with an additional function for the transmission of force in the longitudinal chain direction (L).

10. Chain drive (16) with a push pull chain (1) according to one of the claims 1 to 9, a drive that meshes with the first chain section (2) and a deflector system that meshes with the second or further chain section (3) and that deflects the second or further chain section (3).

11. Chain drive (16) according to claim 10, **characterized in that** the deflector system comprises a chain wheel (17,18).

12. Chain drive (16) according to claim 10, **characterized in that** the deflector system comprises a guideway or guide rail (19).

## Revendications

1. Chaine de poussée (1) comprenant des maillons de chaine (5, 6) reliés les uns aux autres respectivement au moyen d'une articulation de chaine, **caractérisée en ce que** les articulations de chaine d'un premier tronçon partiel de chaine (2) présentent une première orientation de leurs axes d'articulation, et **en ce que** les axes d'articulation des articulations de chaine d'un deuxième tronçon partiel de chaine (3) sont agencés selon une deuxième orientation tournée relativement par rapport à la précédente autour d'un axe longitudinal (L), ou bien peuvent être transférés dans cette orientation tournée.

2. Chaine de poussée (1) selon la revendication 1, **caractérisée en ce que** le premier tronçon partiel de chaine (2) et le deuxième tronçon partiel de chaine (3) sont reliés mutuellement au moyen d'une pièce de liaison (4) prédéfinissant ou produisant la rotation relative de l'orientation.

3. Chaine de poussée (1) selon la revendication 1 ou la revendication 2, **caractérisée en ce que** chaque tronçon partiel de chaine (2) comprend alternativement des maillons de chaine extérieurs et intérieurs (5, 6) reliés les uns aux autres respectivement par une articulation de chaine, les articulations de chaine étant constituées chacune d'un axe de chaine (10) du maillon de chaine extérieur (6) et d'une douille du maillon de chaine intérieur (5).

4. Chaine de poussée (1) selon l'une des revendications précédentes, **caractérisée en ce que** la pièce de liaison (4) présente une première zone de liaison pour assurer l'assemblage avec le premier tronçon partiel de chaine (2), et une deuxième zone de liaison pour assurer l'assemblage avec le deuxième tronçon partiel de chaine (3), et les zones de liaison font tourner le premier et le deuxième tronçon partiel de chaine (2, 3) l'un par rapport à l'autre d'un angle se situant dans une plage de 30° - 150°, de préférence de 60° - 130° et notamment de 90°.

5. Chaine de poussée (1) selon l'une des revendications précédentes, **caractérisée en ce que** la pièce de liaison (4) présente une première zone de liaison pour assurer l'assemblage avec le premier tronçon partiel de chaine (2), et une deuxième zone de liaison pour assurer l'assemblage avec le deuxième tronçon partiel de chaine (3), la première et la deuxième zone de liaison étant agencées de manière à pouvoir tourner l'une par rapport à l'autre au moyen d'une articulation de rotation placée entre elles.

6. Chaine de poussée (1) selon l'une des revendications précédentes, **caractérisée en ce que** la pièce de liaison (4) présente en guise de zones de liaison, deux trous (13, 14) dans lesquels est agencé respectivement un axe de chaine des maillons de chaine extérieurs (6).

7. Chaine de poussée (1) selon l'une des revendications précédentes, **caractérisée en ce que** la pièce de liaison (4) présente un contour de rigidification pour le premier tronçon partiel de chaine (2) et/ou un contour de rigidification pour le deuxième tronçon partiel de chaine (3).

8. Chaine de poussée (1) selon l'une des revendications précédentes, **caractérisée en ce que** sont prévus plus de deux tronçons partiels de chaine (2, 3), dont au moins deux présentent des orientations tournées relativement l'une par rapport à l'autre, ou bien peuvent être transférés dans ces orientations tournées relativement l'une par rapport à l'autre.

9. Chaine de poussée (1) selon l'une des revendications précédentes, **caractérisée en ce que** la pièce de liaison (4) est conçue en tant que pièce fonctionnelle avec une fonction supplémentaire pour la transmission d'effort dans la direction longitudinale (L) de la chaine.

10. Entraînement à chaine (16) comprenant une chaine de poussée (1) selon l'une des revendications 1 à 9, un entraînement qui est en prise avec le premier tronçon partiel de chaine (2), et un dispositif de déviation, qui est en prise avec le deuxième ou autre tronçon partiel de chaine (3) et dévie le deuxième ou autre tronçon partiel de chaine (3).

11. Entraînement à chaine (16) selon la revendication 10, **caractérisé en ce que** le dispositif de déviation comprend une roue dentée à chaine (17, 18).

12. Entraînement à chaine (16) selon la revendication 10, **caractérisé en ce que** le dispositif de déviation comprend une voie ou un rail de guidage (19).
